# EUROPEAN PATENT SPECIFICATION

(11) **EP 1 400 093 B1**
(45) Date of publication and mention of the grant of the patent: **31.05.2006**
(21) Application number: 02744283.9
(22) Date of filing: 10.06.2002
(51) Int. Cl.: H04L 29/12, H04L 29/08, H04L 12/06

(54) **Method, memory medium, computer network and device for two-way initiated data communication with wireless devices**
Verfahren, Speichermedium, Netwerk und Apparat für eine biderektional initierte Datenkommunikation mit einer drahtlosen Einrichtung
Procédé, medium de memoire, réseau d'ordinateur et appareil pour une communication de données avec des dispositifs sans fil lancée de façon bilaterale

(30) Priority: 08.06.2001 US 296902 P
(43) Date of publication of application: 24.03.2004
(73) Proprietor: 4th Pass Inc., Seattle, WA 98104 (US)
(72) Inventor: MEHTA, Samir Narendra, Sammamish, Washington 98074 (US); RAMADAN, Mazin, Seattle, WA 98118 (US); HELLER, Geoffrey S., Seattle, WA 98121 (US); SHARMA, Vineet R., Renton, WA 98056 (US); JANSEN, Markus L., Renton, WA 98056 (US); GOW, Edward, L., Seattle, WA 98118 (US); NGUYEN, Ngochan T., Seattle, WA 98118 (US)
(74) Representative: Grünecker, Kinkeldey, Stockmair & Schwanhäusser Anwaltssozietät
(86) International application number: PCT/US2002/018485
(87) International publication number: WO 2002/102012

(56) References cited:
- EP-A- 0 883 271
- EP-A- 1 003 315
- WO-A-99/07108
- KATO ET AL.: "Mobile IP using private IP addresses" [Online] 5 July 2001 (2001-07-05) , IEEE , COMPUTERS AND COMMUNICATIONS, 2001. PROCEEDINGS. SIXTH IEEE SYMPOSIUM ON XP002222990 Retrieved from the Internet: <URL: http://ieeexplore.ieee.org/iel5/7446/20240 /00935420.pdf?isNumber=20240&prod=CNF&arnu mber=935420&arSt=491&ared=497&arAuthor=Kat o%2C+T.%3B+Idoue%2C+A.%3B+Yokota%2C+H.0> [retrieved on 2002-11-29] page 491 -page 497

## Description

### BACKGROUND OF THE INVENTION

### Field of the Invention

The present invention relates to methods and systems for initiating communication with wireless devices and, in particular, to methods and systems for initiating communication with a device on a private network from a device on a public network to achieve virtual end-to-end connectivity.

### Background Information

The need to connect networked computers together with other networks of computers has become increasingly important as our global society strives to communicate for business and personal reasons on an international level. This need has driven the technical community to devise ways to interconnect devices on different physical networks so that devices on heterogeneous and homogeneous networks can communicate with one another as in a uniform (or standard) manner. Such interconnection technology is often referred to as "internetworking," "internetworks," or simply "internets." One such global internetworking implementation is the Internet (first letter capitalized to distinguish from "internets" generally), as originally developed by the ARPA, NSF, etc. for educational and government purposes. The Internet, in its now expanded version, exists as a complex infrastructure of network backbones that connect to networks around the world. Other (local, regional, private, or public) networks connect to the Internet backbone by means of gateways or routers (also known as gateway servers, gateway systems, router servers, and router systems). For purposes of this document, the term "router" or "gateway," used alone or to modify another noun, are used interchangeably and will refer generically to any hardware or software, subsystem, system, or code that is able to transfer a data packet (at any level of the network or physical data transfer) between two or more homogeneous or heterogeneous machines, systems, or subsystems, without regard to a particular gateway/router machine or service. In the Internet environment, the presence of a router or gateway typically indicates an ability to route an Internet datagram to another router or machine. Machines intended to run applications are generally referred to using networking terminology as "hosts" or "host machines;" for purposes herein, a router/gateway may be a function of a host machine or may be a separate device.

In the Internet environment, the various networks and devices communicate using standard network protocols and models, such as TCP/IP (or UDP/IP). Although for the purpose of this document, the reader is presumed to be familiar with networking concepts, protocols, and standards, a brief summary is provided herein for ease. Extensive background information of internetworking, internets, the Internet, and related terms and background technology can found in Tanenbaum, A., *Computer Networks,* Prentice-Hall, N.J., 3d ed. 1996, and in Comer, D., *Internetworking with TCP*/*IP, Principles, Protocols, and Architectures,* Prentice Hall, N.J., 4th ed. 2000.

TCP/IP and UDP/IP (or often referred to as "UDP") refers to a popular transport layer and network layer protocol combinations, which are commonly found in internetworking environments (other protocols are available at each of these layers as well). The "IP" in TCP/IP, refers to "Internet Protocol," and is a network layer protocol that defines how data is organized and represented (the format and meaning of datagrams) and the communications transactions used to route them. TCP ("Transmission Control Protocol") and UDP ("User Datagram Protocol"), which are both transport layer protocols that can be implemented on top of an IP protocol, support connection-based and connectionless data transfer, respectively. Connection-based data transfer implies that a source and destination device request a connection and then send data to each other over the "virtual" connection in a manner that is sequenced (and typically involves handshaking mechanisms). The term "virtual" here implies that, although the connection is not necessarily hard-wired, the connection appears to provide a direct conduit between a source (requestor) and destination (receiver). The data actually flows through lower protocol layers to be eventually transmitted over a physical transmission medium. Connection-less data transfer implies that the source sends a datagram to the destination, but doesn't insure delivery or that data will arrive in a particular order.

The IP protocol also defines a uniform network addressing mechanism, so that machines that implement protocols that use IP, such as TCP or UDP, are able to specify sources and destinations for their data transfers. The network addressing mechanism specifies an abstract address and a binding protocol for mapping the abstract address to a physical hardware address. For purposes of this description, the uniform network addressing mechanism will be referred to generically as an "IP address." IP addresses are often written in "dotted decimal" notation, which specifies an address as "w.x.y.z" (e.g., in a 32-bit address, each letter designates a byte of information). For example, an IP address such as "192.251.0.1" may specify a host machine at network "192," subnet "251," and domain "0." Using IP, typically a range of addresses are reserved for private network use and the remaining IP addresses are either reserved for other uses or for public (routable) addresses, which are assigned by an authority organization. Multiple private networks may assign the same (non-routable) IP addresses internally (currently the Internet Corporation for Assigned Names and Numbers, ICANN), but use unique public IP addresses to connect to the Internet. For example, in Class B networks (which, using class-based addressing conventions, allow up to 254 host machines each), private addresses may range from 192.168.0.0 to 192.168.255.0. Addressing conventions are well-known to one skilled in the art and are presumed known to the reader. For purposes of this application, an IP address is understood to be whatever address makes sense (and is defined) in a particular internetworking environment, although examples which use Internet IP addressing may be referred to.

A network that supports IP can be connected to another TCP/IP-based or UDP/IP-based internet or the Internet, by providing a router which forwards data to another router or host machine based upon an IP address. The router (or routing server / service) typically contains a routing table, which determines to which machine (and optionally to which port) to send a datagram, given a destination IP address. The IP address uniquely identifies a router/host machine, and, in a typical TCP/IP network, can be mapped to a string name that identifies, for example, a particular machine as part of a larger domain. (Although referred to herein often as a TCP/IP-based network, one skilled in the art will recognize that the network may also be UDP-based (connectionless), and may support another session management system.)

In a typical TCP/IP (inter)network, machines are organized according to a naming hierarchy. One such hierarchy is the Domain Name System ("DNS"), which specifies how a particular machine is connected to others. (The term DNS is sometimes used also to identify a server or service that implements the DNS protocol.) For example, the string "initials_machine.4thpass.service_provider.com," may be used to specify a machine belonging to you and connected to the 4thpass company LAN, which is in turn connected to a service_provider's WAN (wide area network). TCP/IP and UDP/IP defines tools/libraries for client systems to use to determine an IP address (a logical address on an internet) given a string name of a particular router/machine. One such tool is referred to as a DNS query and includes, for example, an API called "GetHostByName." GetHostByName returns an IP address given a string. A server machine that implement the DNS standard for a particular organization, network, or subnetwork is referred to herein simply as a DNS, although DNS services may be provided in conjunction with other networking services on a single physical machine.

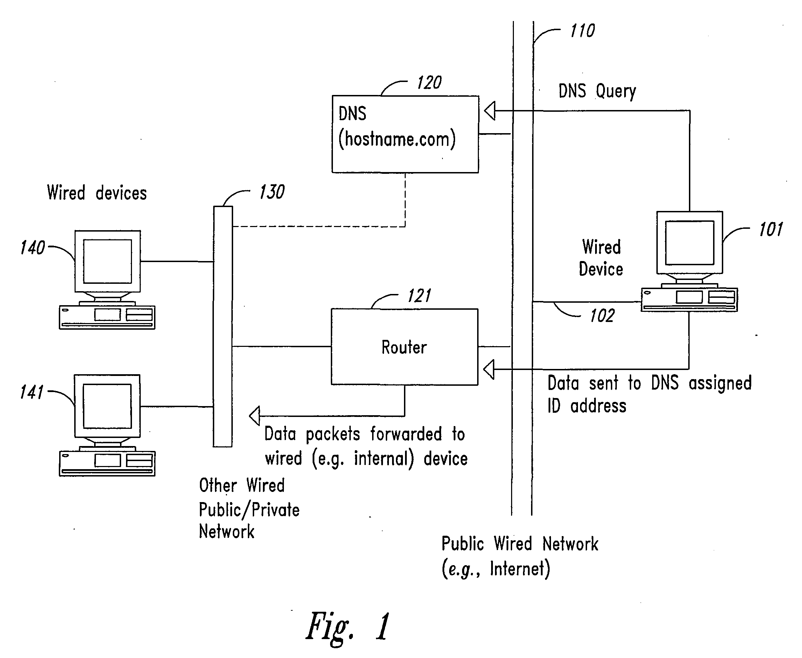

Figure 1 is an example block diagram of basic Internet or internet communication to send a data packet using TCP/IP or UDP/IP. In Figure 1, a host machine 101 is shown connected to the Internet 110 via wire 102. Other wired devices, such as host machines 140 and 141, are shown connected to a private (or public) network 130, which could be, for example, a local area network (LAN). The devices on network 130 communicate over the Internet 110 by means of an additional machine, a router 121, which is shown connected via a wire (*e.g*., a phone line). A DNS server 120 is shown, also connected via a wire, to internet 110. in basic typical operation source device-(host machine) 101, intending to send a data packet to device 140 (via TCP or UDP), first performs a DNS query to obtain an IP address that corresponds to a string name that represents the device 140. For example, to send data to "initials_machine.4thpass.service_provider.com," DNS 120, may correspond to a DNS server for "4thpass.com." This server knows how to locate machines in its "domain," for example, the "initials_machine", and can retrieve their corresponding public IP addresses. Upon determining the correct (public) IP address, the DNS 120 returns this address to the source device 101. The source device 101 then can either open up a TCP connection to communicate with the destination device 140 or simply send packets via UDP or other connection-less protocol using the returned public IP address. EP-A-1 003 315 discloses a method in a computer network according to the preamble portion of claim 1.

### BRIEF SUMMARY OF THE INVENTION

The present invention is defined solely by the independent claims 1, 13-17. The dependent claims relate to preferred embodiments.

Embodiments of the present invention provide computer and Embodiments of the present invention provide computer- and network-based methods and systems for two-way initiated, bi-directional communication with wireless devices using connection-based or connection-less protocols, such as, for example, TCP/IP and UDP/IP. Example embodiments provide an Address Management Proxy System ("AMPS"), which enables devices and systems connected to a public internetwork, such as the Internet, to initiate communication with and send data to wireless devices connected to a private wireless network, without exposing the non-routable private addresses of these wireless devices. The AMPS allocates a public (routable) network address for temporary use by a requesting device on art external public network to communicate with a wireless device on a private wireless network. In one embodiment, a pool of public addresses, for example, public IP addresses, is maintained by the AMPS and allocated dynamically to wireless network devices as required. The mapping of a temporary public address to the private address of a wireless device is maintained and updated transparently by the AMPS using routing tables and other mapping data structures.

In one embodiment, the AMPS comprises one or more modified DNS/API servers, one or more Address Proxy/Routers, an Address Management Data Server, one or more Address Management Data Repositories, and optionally a load balancer. The AMPS DNS'/API server receives a request from a device on a public network for a particular wireless device, and returns an appropriate temporary public address, which is internally mapped to the private address of the wireless device. The public address is then usable by the device on the external public network to send data to the wireless device. The temporary public address is, for example, an address associated with one of the Address Proxy/Routers, which are connected to the external public network and have access to the private addresses on the private wireless network. In some cases, the device on the public network that desires to send data to the wireless device uses a connection-based protocol, such as TCP/IP to send data. In other cases the device uses a connection-less protocol, such as UDP (UDP/IP) to send the data.

According to one approach, the AMPS provides a modified DNS server that changes what is returned as a result of a call to a standard DNS query function, such as GetHostByName. In another approach, the AMPS implements a specialized API for a device on a public network to use to query for a public address of a designated wireless device. Using a specialized API implementation in conjunction with internet Protocol, the AMPS can map private address to addresses that comprise only IP addresses, or can map to an (IP address, port) pair. This latter implementation can extend the usefulness of a particular public address space.

The AMPS techniques can be used by a wired device on a private or public network and by a wireless device on such a network acting in a capacity of a source device, as long as the device is connected to a public network that can address and be addressed by the AMPS. Thus, the AMPS mechanisms can be used by devices on different private wireless networks to communicate with one another. In addition, the AMPS mechanisms can be used with other internetworks, such as ATM networks and with data transfer protocols other than TCIP/IP or UDP.

To insure a greater degree of security, according to one embodiment , the AMPS maintains a Time to Live (TTL) parameter with each address mapping. In this way, once the TTL value indicates that the mapping has expired, the AMPS can destroy the mapping, and also any connection. Further, in some embodiments, the AMPS also puts a timestamp in its own mapping tables. After some timeout period based upon the timestamp, the AMPS can destroy the mapping, thereby forcing a new mapping to be initiated on a periodic basis.

### BRIEF DESCRIPTION OF THE DRAWINGS

Figure 1 is an example block diagram of basic Internet or internet communication to send a data packet using TCP/IP or UDP/IP.
Figure 2 is a block diagram of an example Address Management Proxy System used in bi-directional communication with a wireless device.
Figure 3 is an example block diagram of components of an example Address Management Proxy System.
Figure 4 is an example block diagram of a general purpose computer system for practicing embodiments of the Address Management Proxy System.
Figure 5 is an example flow diagram of the process performed by a device on a public network to send data to a wireless device located on a private wireless network using the Address Management Proxy System.
Figure 6 is an example block diagram of some of the Address Management Proxy System data repository tables used to support routines of the DNS'/API servers and the Address Proxy/Routers.
Figure 7 is an example flow diagram of an example routine provided by a DNS'/API server of the Address Management Proxy System to return a public address that corresponds to a designated unique identifier.
Figure 8 is an example flow diagram of an example routine within an Address Proxy/Router of an example Address Management Proxy System that receives data.

### DETAILED DESCRIPTION OF THE INVENTION

Embodiments of the present invention provide computer- and network-based methods and systems for two-way initiated, bi-directional communication with wireless devices using connection-based or connection-less protocols, such as, for example, TCP/IP and UDP/IP. Example embodiments provide an Address Management Proxy System ("AMPS"), which enables devices and systems connected to a public internet, such as the Internet, to initiate communication with and to send data to wireless devices connected to a private wireless network, without exposing the non-routable private addresses of these wireless devices.

In existing systems, data communication (communication on a data channel) between a wireless device that is connected to a private wireless network and a wired device connected to a public wired network (e.g., the Internet) can only be initiated by the wireless device. Some carriers have assigned fixed public IP addresses to wireless devices; however, the wireless devices need to then have client programs (*e.g*., a UDP stack) capability of receiving and handling the incoming communication packets. Moreover, these wireless devices are then part of a public wireless network and not a private wireless network. Since public IP addresses are becoming a more scarce commodity and currently expensive to service a network of multi-million devices, carriers cannot in a practical sense count on having a fixed public IP address for each device on its network. (Although movement to IPv6 will allow more addresses, the current IPv4 definitions are limited and the potential number of wireless users subscribing to larger carriers is very high. In some regions of the world, the current public address scheme is even more limited.) Further, such addressing capability would expose each device to further security risks, because each such device is part of a.publicly accessible network and it becomes more difficult to implement and enforce security measures. Thus, assigning private I P addresses to devices is preferred in existing wireless networks over assigning fixed public IP addresses to devices. When wireless networks are private, the locations (addresses) of the wireless devices are intentionally hidden from public view by a carrier system's (or, as referred to in some countries, operator's) infrastructure.

Wireless systems on private networks use techniques similar to Network Address Translation (NAT) technology to send data from a wireless device to the public networking world. In a typical carrier infrastructure that uses a private network, a wireless device "registers" itself with the carrier infrastructure when it powers on (or in other circumstances, when the device attempts to initiate data services). The carrier dynamically assigns the wireless device a private non-routable address by means of DHCP (or DHCP-like) server. The information on the mapping of the transient private IP address to the device public IP address is stored in an internal carrier database and managed by carrier services such as a RADIUS server.

The actual path taken by data when sent from a wireless device on a private network to the internet (or vice versa) is very much network infrastructure, carrier technology dependent, and proprietary. Although several standards have emerged, they are very diverse in nature. In a GPRS network, for example, a SGSN (Service GPRS node) manages the communication with wireless devices; whereas the SGSN connects to a GGSN (Gateway GPRS Node) to connect to the Internet network. Regardless of the mobile network used, data communication between a wireless device and internet involves various network elements like GGSN (or similar elements, based on GPRS, GSM, CDMA or any other network), DNS servers, routers and gateways.

Limited facilities exist for sending short sequence messages from a wired device on a public network to a mobile device on a wireless network (with a private address), again dependent upon carrier and network technology. SMS (Short Message System) protocol defines a format for such messages, but doesn't provide any guidance for underlying structure or data transfer. In addition, such messages are of a fixed (very short) length and use a specialized channel for sending control information (a signaling channel), not a data channel.

Therefore, there is no existing mechanism for setting up a bi-directional communication channel to communicate with wireless devices that are connected via a private network to the carrier infrastructure using a standard addressing scheme. Nor, is there any mechanism for initiating the communication with such a wireless device from a device connected to a public network. Thus, embodiments of existing systems are not able to support any kind of programmatic "push" of data to wireless devices from wired devices that reside external to a carrier's infrastructure. In addition, messages sent from the wireless device to a device on a public (wired) network cannot be directly responded to by the wired device, because the address of the wireless device contained in the message may no longer be valid. Moreover, it is not possible using these systems to provide over-the-air provisioning of applications and to send other code to a wireless device from a device external to the carrier infrastructure. Over-the-air provisioning and related techniques for dynamic provisioning and downloading applications to wireless devices are discussed in detail in WO 02 448 92 entitled "Method and System for Maintaining and Distributing Wireless Applications, published 6.6.2002. Thus, a mechanism for allowing an external device with a public IP address to initiate bi-directional communication with a wireless device is highly desirable.

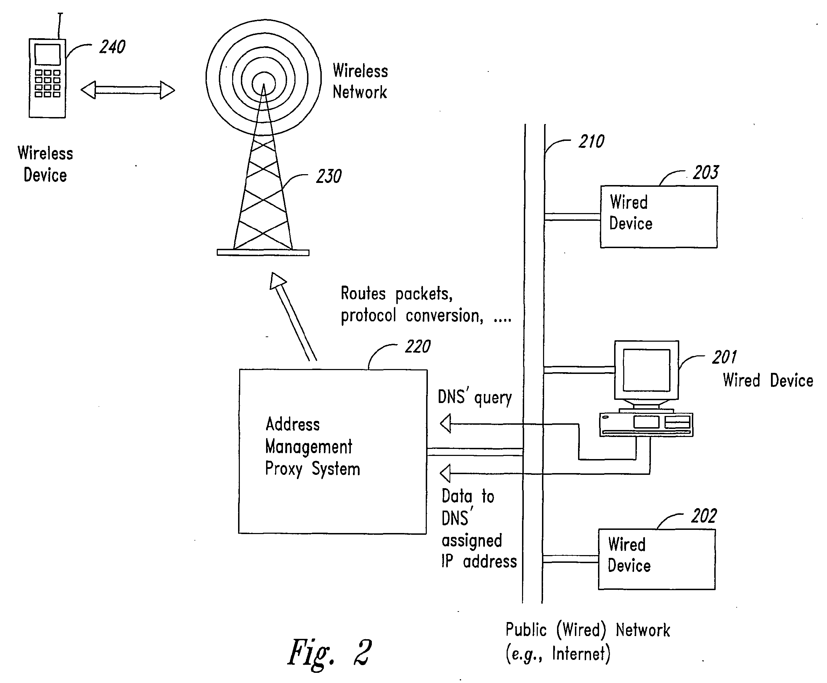

The Address Management Proxy System achieves two way initiated bi-directional communication by implementing a modified DNS server and serving as a proxy/router for devices on the private wireless network as they interface to the public wired internetworking world. In summary, a pool of public addresses is maintained and dynamically distributed among active wireless devices as needed by the AMPS. Figure 2 is a block diagram of an example Address Management Proxy System used in bi-directional communication with a wireless device. The term "bi-directional" as used herein means that data paths and communication can flow in either direction between two endpoint systems. Figure 2 shows wired devices 201, 202, and 203 connected to public network 210. One skilled in the art will recognize that these devices could be connected to another private or public network, which is then connected by one or more wired devices to the public network 210, yet still achieve the functionality discussed here. Any such variation provides equivalent functionality and is explicitly contemplated and presumed to be part of the present invention. On the wireless side, the AMPS 220, acting in its capacity as a proxy (and router) for wireless devices, is shown both connected via wire to the public network 210 and via standard carrier infrastructure elements (not shown) to the wireless network 230. It is presumed that the reader has a working knowledge of the elements of a carrier's infrastructure and the basic mechanisms for routing and mechanisms converting packets from a wired network to a wireless network. These may use analog or digital technology and may require protocol conversions in order to send the physical data and transmit it, for example through a satellite, ultimately to the wireless device. Detailed background information on wireless technology and wireless routing mechanisms is described in Stallings, W., *Wireless Communications and Networks,* Prentice Hall, N.J., 2002. In Figure 2, wireless device 240 is shown connected via various wireless elements (not shown) to the wireless network 230.

In operation, when a wired device such as wired device 201, desires to send data to wireless device 240, the wired device needs first to determine a routable address location of the wireless device 240 on the public network 210. However, as can be observed from Figure 2, the wireless device 240 is not directly connected to the public network 210. Thus, the wired device must use the Address Management Proxy System 220 to determine a routable (public) address to which to send the data destined for the wireless device 240. To accomplish this task, the wired device 201 performs a query (for example, a modified DNS query) to locate a routable public address that corresponds to wireless device 240. The Address Management Proxy System 220 receives the query and determines and assigns a public (routable) address from a pool of addresses, which address can be used as a destination address for data packets targeted to wireless device 240. One should note that, although shown here as a DNA query, the Address Management Proxy System, as will be described further, modifies the DNS query implementation to handle wireless device technology, and/or provides an alternative API for determining a suitable routable address. Once the Address Management Proxy System 220 has returned a routable address to wired device 201, the wired device 201 can send data to that address. The Address Management Proxy System 220 receives the data, converts formats and protocols, etc., as needed, and sends the converted data through the wireless network 230 to the wireless device 240.

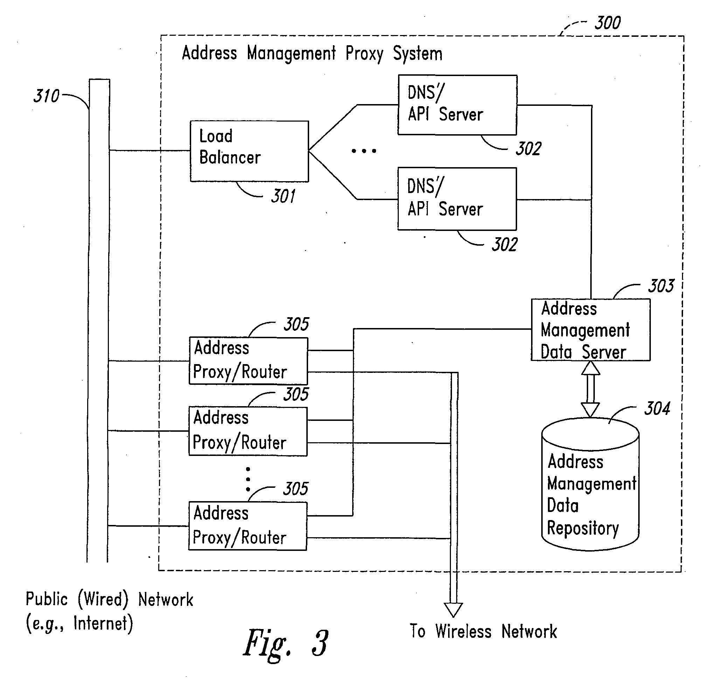

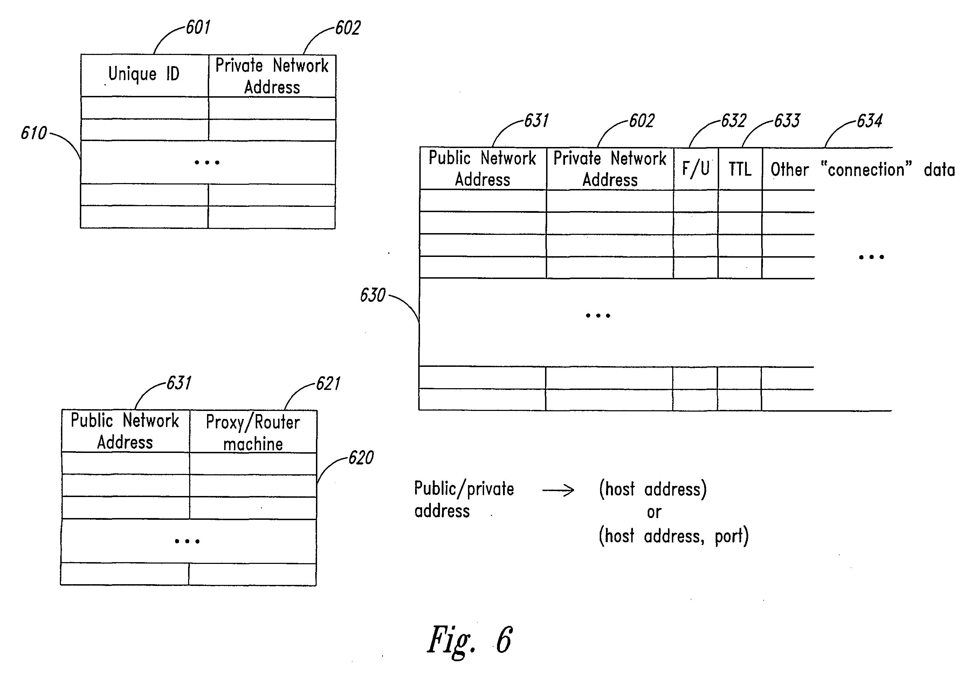

Figure 3 is an example block diagram of components of an example Address Management Proxy System. In one embodiment, the Address Management Proxy System (AMPS) comprises one or more modified DNS'/API servers 302, one or more Address Proxy/Routers 305, an Address Management Data Server 303 which manages a database or other repositories such as Address Management Data Repository 304, and optionally a load balancer 301. The DNS'/API servers 302 are either individually connected to a public network 310 or are connected to the load balancer 301 which is in turn connected to public network 310. Similarly, each Address Proxy/Router 305 is also connected to the public network 310, via the routable (public) address to which data from the external network 310 is sent that is destined for the wireless devices. The DNS'/API servers 302 are either modified implementations of a DNS server to add functionality necessary to communicate with wireless devices, or are servers that implement one or more specialized APIs, as will be described further below. The DNS'/API servers 302 use the Address Management Data Server 303 to assist in mapping a unique identifier (e.g., string name) for a wireless device to a public address on public network 310. The pool of public addresses is also maintained by the Address Management Data Serve 303 and Data Repository 304. The Address Management Data server 303 and Address Management Data Repository 304 may be implemented using existing database technology, for example, ODBC technology or, may be implemented as a structure such as a simple text file. One skilled in the art will recognize that any embodiment for storing a set of tables, data, lists, or mappings can be used. Each Address Proxy/Router 305 also uses the Address Management Data Server 303 or equivalent to create and update a series of routing tables that are used to assign public addresses to wireless devices as needed and to update the various mappings between public addresses and the non-routable (private) addresses of the wireless devices. The tables and mappings that are maintained on behalf of the DNS'/API servers 302 and the Address Proxy/Routers 305 by the Address Management Data Server 303 are described below with reference to Figure 6.

Although the techniques of the AMPS are generally applicable to any a wired device communicating with a wireless device, the phrase "public network" (or "wired network") is used generally to imply any type of internetworked environment including a public network or a backbone that is somewhere down the line connected to one or more private or public networks. In addition, although the examples described herein often refer to the Internet, one skilled in the art will recognize that the concepts and inventions described are applicable to other forms and embodiments of internetworking, including, for example ATM type networks. Thus, techniques of the present invention can also be used by one device on a first wireless network to communicate with another wireless device on a second network - each device ends up communicating with the Address Proxy/Router of the other network. This scenario is feasible because each wireless network (or its carrier infrastructure) is connected to a proxy/router that is also connected (via a public address) to a public network. In addition, although a public network is sometimes also referred to herein as a wired network, one skilled in the art will recognize that any network that exposes routable (public) addresses may be implied. Thus, a wireless network with unique public (and routable) address can also employ techniques of the present invention to perform bi-directional communication. Also, one skilled in the art will recognize that terms such as wireless device, phone, handheld, etc., are used interchangeably to indicate any type of wireless device that is capable of operating with the AMPS. In addition, terms may have alternate spellings which may or may not be explicitly mentioned, and one skilled in the art will recognize that all such variations of terms are intended to be included.

Example embodiments described herein provide applications, tools, data structures and other support to implement private to public address mappings over one or more wired and wireless networks to be used for bi-directional communication. One skilled in the art will recognize that other embodiments of the methods and systems of the present invention may be used for many other purposes, including to push information and/or data or code from a public network such as the Internet to a wireless device. In addition, although this description primarily refers to "data" as being sent via the networks, one skilled in the art will recognize that all types of data can be communicated using the techniques described herein including, but not limited to, text, graphics, audio, and video.

Also, in the following description, numerous specific details are set forth, such as data formats and code sequences, etc., in order to provide a thorough understanding of the techniques of the methods and systems of the present invention. One skilled in the art will recognize, however, that the present invention also can be practiced without some of the specific details described herein, or with other specific details, such as changes with respect to the ordering of the code flow.

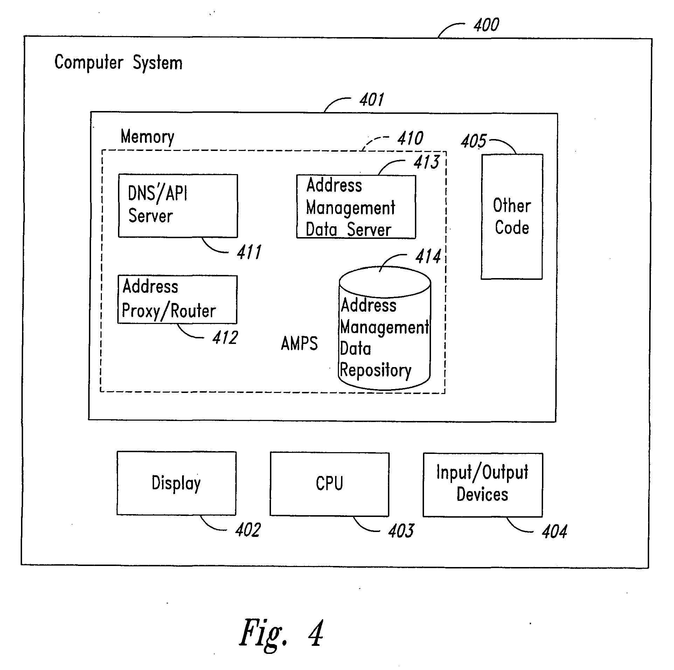

Figure 4 is an example block diagram of a general purpose computer system for practicing embodiments of the Address Management Proxy System. The general purpose computer system 400 may comprise one or more server and/or client computing systems and may span distributed locations. In addition, each block may represent one or more such blocks as appropriate to a specific embodiment or may be combined with other blocks. The various blocks of the Address Management Proxy System 410 may physically reside on one or more machines, which use standard interprocess communication mechanisms to communicate with each other. In the embodiment shown, computer system 400 comprises a computer memory ("memory") 01, a display 402, a Central Processing Unit ("CPU") 403, and Input/Output devices 404. The Address Management Proxy System 410 is shown residing in memory 401. The components of the Address Management Proxy System 410 preferably execute on CPU 403 and manage the address mapping of wireless devices on a wireless network, as described in previous figures, to allow other wired systems to communicate with the wireless devices. Other downloaded code 405 and potentially other data repositories also reside in the memory 410, and preferably execute on one or more CPU's 403. In a typical embodiment, the AMPS 410 includes one or more DNS'/API servers 411, one or more Address Proxy/Routers 412, an Address Management Data Server 413, and Address Management Data Repositories 414. As described earlier, the AMPS may include other data repositories and components, such as a load balancer, depending upon the particular implementation.

In an example embodiment, components of the AMPS 410 are implemented by modifying existing UDP-based technology, such as DNS servers and routers, which are typically implemented on Linux/Unix systems written in the C programming language. Programming interfaces to the DNS'/API servers 411 and Address Proxy/Routers 412 can be available by standard means such as through C, C++, C#, and Java API and through scripting languages such as XML, or through web servers supporting such. The Address Management Data Server 413 and Address Management Data Repositories 414 are preferably implemented for scalability reasons as a database system rather than as a text file and may be implemented using a SQUODBC database management system. The DNS'/API servers 411 and Address Proxy/Routers 412 are typically implemented using Linux, UNIX, or other Unix-based or Unix-like machines.

One skilled in the art will recognize that the AMPS 410 may be implemented in a distributed environment that is comprised of multiple, even heterogeneous, computer systems and networks. For example, in one embodiment, the DNS'/API servers 411, the Address Proxy/Router components 412, and the Address Management Data Servers 413 with their data repositories 414 are all located in physically different computer systems. In another embodiment, various components of the AMPS 410 are hosted each on a separate server machine and may be remotely located from the tables which are stored in the address management data repository 414. In addition, under some scenarios, the entire AMPS system 410 may be hosted within a carrier's infrastructure and be completely subsumed by it. Different configurations and locations of programs and data are contemplated for use with techniques of the present invention. In example embodiments, these components may execute concurrently and asynchronously; thus the components may communicate using well-known message passing techniques. One skilled in the art will recognize that equivalent synchronous embodiments are also supported by an AMPS implementation. Also, other steps could be implemented for each routine, and in different orders, and in different routines, yet still achieve the functions of the AMPS.

There are several implementation approaches to the components of the Address Management Proxy System, three of which are described herein. One skilled in the art will recognize that various other approaches and combinations are possible. All three approaches allocate a public (routable) network address for temporary use by a wired device to communicate with a wireless device. In one embodiment, a pool of public addresses, for example, public IP addresses, is maintained and allocated dynamically to wireless network devices as required. For example, a typical Class B Internet network address block allows for approximately 65,000 simultaneous connections to wireless devices. Although this number may seem large at first blush, when one considers the number of cell phones and handsets, for example, connected to a carrier, this number can be quite limiting.

The first approach provides a public address mapping for a wireless device and makes it available using a UDP protocol. This is a store and forward type of approach. One advantage of this approach is that it facilitates UDP-based traffic to wireless devices over a wireless connection and allows a device connected to the public side of the connection to initiate the connection. A disadvantage, however, is that either the standard UDP protocol requires modification or an extra API call is added so that the requesting device can identify the destined wireless device. These modifications are necessary because the UDP protocol only supports the designation of an IP address and does not provide for an alternative means of uniquely identifying a device (such as a string similar to the TCP/IP protocol). Since it is desirable to hide this (private) address, the standard UDP call to send data does not suffice.

The second approach used to implement the AMPS supports full bi-directional communication through point-to-point connections established, for example, using TCP/IP protocol. (Note that these same techniques also support connection-less UDP bi-directional communication). The second approach can be implemented by providing a modified implementation of a standard UDP orTCP/IP function, "GetHostByName." The GetHostByName API allows a string designation to identify the designated device and returns an IP address data structure. Alternatively, to increase the level of security provided, the AMPS can implement a specialized API to return the dynamically allocated public address that (now) corresponds to the requested wireless device. A disadvantage of the specialized API approach is that the device on the public network (or other device that wishes to obtain a connection to the wireless device) needs to include specialized code in the application on the requesting device.

The third approach is similar to the second approach, but provides for greater potential simultaneous connections using a "port" concept. Using this approach, instead of returning just a host address on the wired network that corresponds to the wireless device (a public address of an Address Proxy/Router), the AMPS also returns a particular port designation on the host machine (the Address Proxy/Router). Ports and their implementation are well known in the art and, in general, correspond to queues implemented by the machine that receives the data to track messages destined for different locations. The machines that receive the data forward messages to the different destinations based upon the port designations in the message and handle, where necessary, sequencing and handshaking on a by-port basis.

Ports are typically used to open multiple virtual channels on a single physical address and potentially extend a single physical address to another approximately 65,000 connections. This enables an AMPS to use Class C IP addresses, for example, which are typically much cheaper and more readily available than the other types of addresses, to achieve approximately 16 million simultaneous connections to wireless devices (using a UNIX-based system). One skilled in the art will recognize that the number of ports available and their particular implementation is operating system dependent and directly correlates to the number of bits used to specify a port address.

The UDP (as well as TCP/IP) protocol currently supports a port abstraction; however, the standard DNS query used with UDP and TCP/IP systems (e.g., GetHostByName) does not allow for the returning of a port designation and leaves control of the port designation up to the requesting device instead of the receiving router. Thus, according to the third approach to implementing the AMPS, ports are specified preferably by the Address Proxy/Router using a specialized API and returned to the requesting device with the host machine designation.

In one embodiment, a scripting language interface, such as XML, can be used instead of a specialized API (code interface) to interface to a specialized address mapping function. When using XML, the DNS'/API server accepts API calls as XML post events and returns XML formatted responses. Similar support for invoking this mapping function using other language models and/or other programming languages is also contemplated and will operate with techniques of the present invention. An XML type interface minimizes the cost to a requesting device of integrating an API into its software.

In addition, when using a specialized API, the requesting device can push additional data to the private wireless device with no further coding effort required. For example, billing code orienting to billing the wireless device for the type of connection being established with the wired device can be pushed to the wireless device using this technique. An example billing code mechanism is discussed in U.S. Patent Application No.10/085,981, entitled "Method and System for Transmission-Based Billing of Applications," filed on February 26, 2002.

There are several security related reasons that also may indicate a desire to use a specialized API rather than the standard GetHostByName API of UDP and TCP/IP. These security reasons may indicate a desire to use the port-based mechanism which also requires a specialized API. First, any bi-directional communication that uses the "GetHostByName" API and router protocol is susceptible to denial of service (DOS) attacks associated with that host name. DOS attacks can occur as a result of one or more machines specifying the same GetHostByName with the same input parameter simultaneously so as to close out the possibility of enough public addresses (of proxy/router machine addresses) being available. Second, use of the GetHostByName (or any other standard) API also makes the AMPS susceptible to security attacks as a result of DNS zone transfer. DNS zone transfer occurs, for example, when one DNS transfers a DNS query to one or more other DNS servers in order to find a requested host name. One typical scenario involves multiple DNS hops from country to country. The idea of DNS zone server attacks is to capture information on a particular DNS server by inserting malicious code as a malicious DNS server and impersonate the destination address. Third, inattentiveness to the duration of a connection can make data available to unauthorized requesting devices. Specifically, since a mapping is established between the public device and a wireless device, the public device may assume the mapping to exist longer than it really does and potentially end up (maliciously or not) communicating with the wrong device. This could occur because some DNS server implementations ignore Time to Live settings. Having a modified DNS server implementation, whether or not it implements the standard GetHostByName API, or a specialized API, avoids this problem by abiding by the TTL characteristics of the established mapping between the private and the public addresses.

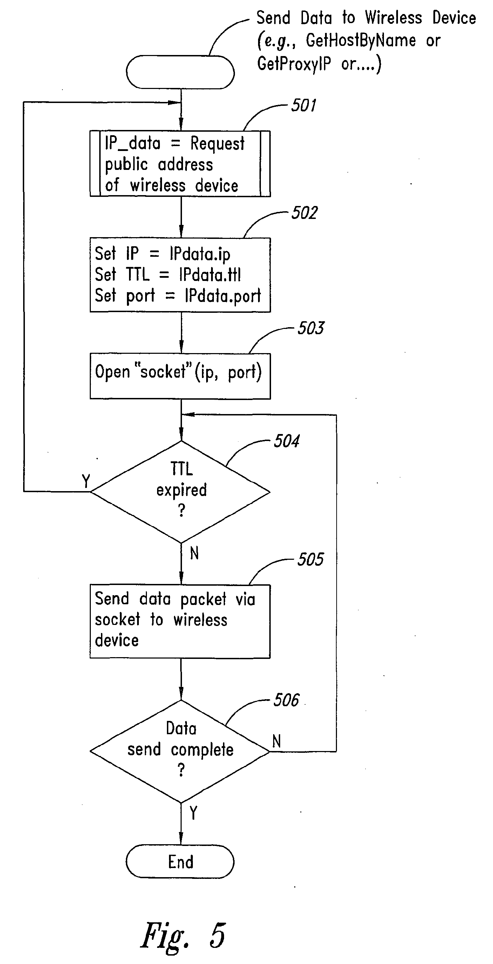

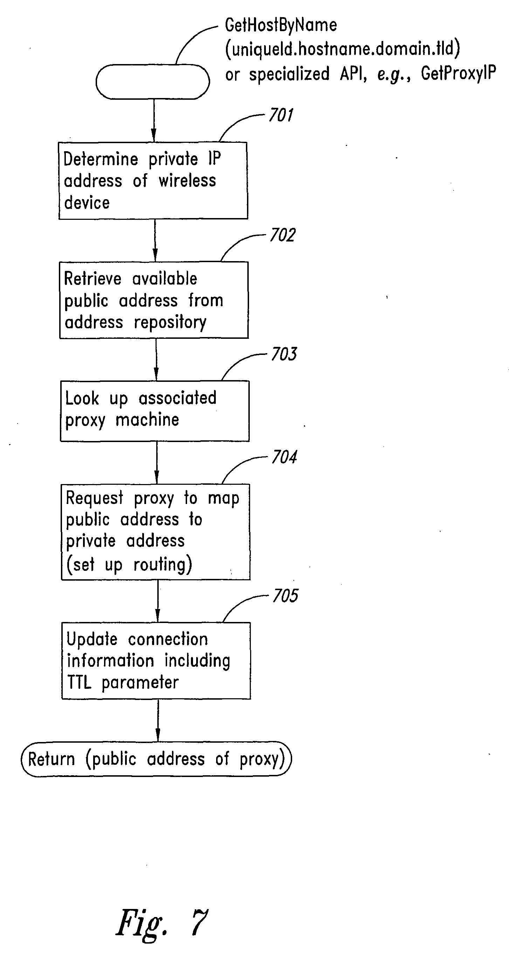

Figures 5-8 describe various example embodiments of the specific routines implemented by the DNS'/API servers and the Address Proxy/Routers to achieve the functionality described with reference to Figures 2 and 3. Figure 5 is an example flow diagram of the process performed by a device on a public network to send data to a wireless device located on a private wireless network using the Address Management Proxy System. In step 501, the source (e.g., wired) device requests a public (routable) address for the designated wireless device from the AMPS. As described above, one mechanism for retrieving such an address is for the AMPS to implement a modified interface for DNS services, such as a modified GetHostByName routine. For example, a GetHostByName routine may be invoked to specify a unique wireless device designation, in a string form. The string "personname.phone.wsp.com" is an example string that indicates a wireless device that corresponds to a person by the name of "person," with a phone number of "phone," located at a wireless service provider's website (DNS) that is abbreviated "wsp.com." (For example, susan.ph2065551212.sprint.com may refer to a person, Susan, with phone number 206 555 1212, on a sprint network.) Another mechanism that may be implemented by the AMPS is to provide a separate (specialized) API, such as "GetProxylP" which returns an indication of a public (routable) address that corresponds to the designated wireless device. Using a separate API is useful for security reasons; for example, it becomes more difficult for a rogue device to intercept the routable address by spoofing. Another reason is to control the actual format of the address information returned, such as to be able to provide a port designation in addition to a host address of the Address Proxy/Router. The implementation of either GetHostByName, or a specialized API such as GetProxyIP, is discussed further below with respect to Figure 7.

In step 502, once the public address for the wireless device has been returned by the AMPS, the source device extracts from the indicated address information an actual address location (IPdata.ip), a Time to Live parameter (IPdata.TTL), and optionally, where applicable, a port designation (IPdata.port) for example, when the standard GetHostByName API is not used. In step 503, when the source device desires to perform connection-based communication with the wireless device, it opens a connection, such as a socket. In step 504, the wired device determines whether the Time to Live parameter specifies that the returned public address of the wireless device has expired, and, if so, returns to step 501 to request a different address, else continues in step 505. The Time to Live parameter is used by the AMPS to ensure that a public address for a wireless device (which may or may not be always connected to the wireless network and powered on) does not extend past a period of usefulness for that wireless device. In some embodiments, a very short TTL parameter is used, to prevent security breaches in which a wired device is able to monitor activity on a particular public address and then use that address for other purposes. In step 505, the wired device sends a data packet (via the connection or not) to the wireless device. It is presumed, but not shown, that the wired device and the wireless device communicate using the standard calls specified in the transfer protocol being used, for example UDP or TCP/IP. In step 506, if the data transaction is complete, then the wired device is done, else it returns to check the TTL parameter in step 504 in order to send more data.

Table 1 below contains pseudocode that describes one example implementation of how a public (requestor) device can use a modified GetHostByName query as described in Figure 5 to obtain a public address that corresponds to a user identified by the phone number "2065551212" using the Address Management Proxy System. From the public device's perspective, standard UDP and TCP/IP calls are invoked in a standard manner.

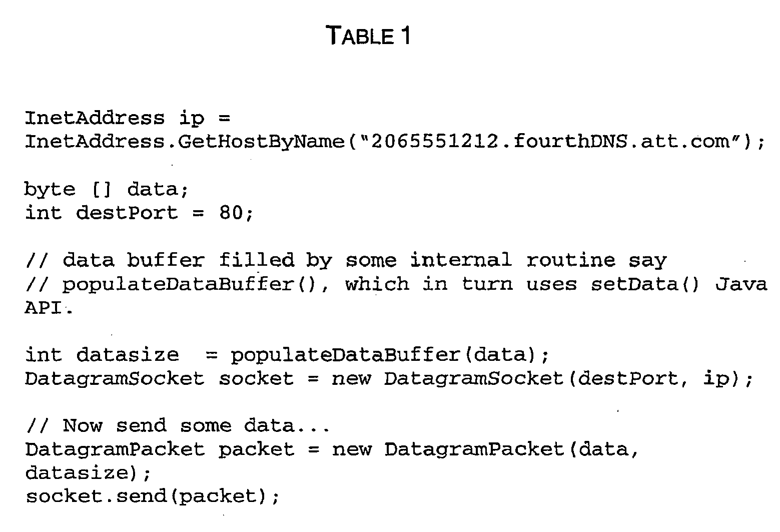

Table 2 below contains pseudocode that describes an example implementation of the specialized API mechanism described in Figure 5 as used by a public (requestor) device to obtain a public address of the user identified by the same phone number. In Table 2, the public device calls a specialized API, GetProxyIP, to get a data structure that contains the needed information including the assigned public address of the Address Proxy/Server. Thereafter, the public device can use the same techniques (standard UDP or TCP/IP protocol) to send the data.

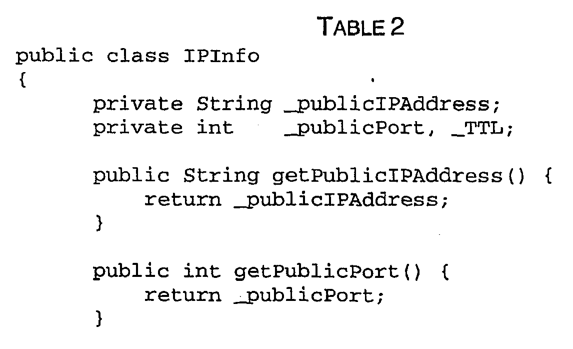

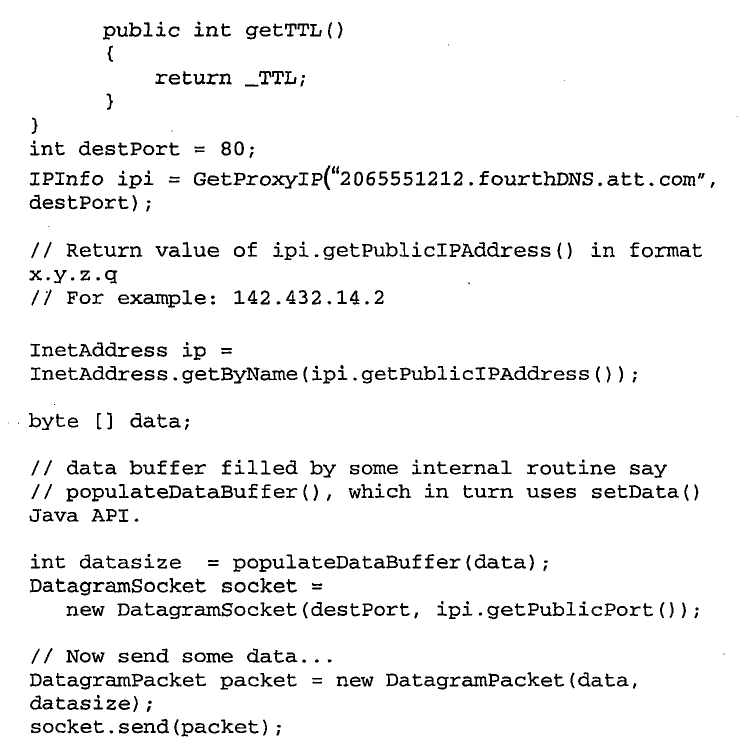

Figure 6 is an example block diagram of some of the Address Management Proxy System data repository tables used to support routines of the DNS'/API servers and the Address Proxy/Routers. In one embodiment, the Address Management Data Repository comprises three tables: a unique identifier (unique ID) to private address table 610, a public-to-private address table 630, and a public address to proxy/router machine table 620. Although three tables are shown, one skilled in the art will recognize that these tables could contain other data and may be organized differently, including a different number of tables and with different columns or fields. In addition, any technique for storing a table or list of data may be used. To support embodiments that map a host address plus a port designator to a wireless device, the tables are correspondingly modified.

The unique ID table 610 maps unique string names of wireless devices to the private wireless network addresses that have been assigned typically by a carrier's infrastructure. In some embodiments, the carrier infrastructure dynamically allocates, using methods similar to a DHCP protocol, a private wireless network address when the wireless device registers itself with the carrier infrastructure upon being powered on. Thus, the unique ID table 610 may be sparsely filled or entries created dynamically and then deleted dynamically as devices register and unregister with the carrier infrastructure system.

The public-to-private address table 630 comprises several fields/columns including a public network address 631, a private (wireless) network address 602, a flag 632 that specifies whether the public address stored in field 631 is free or is already used, a Time to Live (TTL) parameter 633, and other connection data 634. In one embodiment, the DNS'/API servers of the AMPS query table 630 to determine a public network address that corresponds to a designated private wireless network address or to allocate an unused public network address (as indicated in field 632) and map the determined unused public address to a private network address stored in field 602.

Public address to proxy/router machine table 620 comprises a public network address field 631 and an indication of a functioning proxy/router machine 621. By maintaining such a mapping, the AMPS is able to substitute proxy/router machines for other proxy/router machines to provide a higher degree of robustness. Each proxy/router machine has a preconfigured set of public network addresses, such as are typically configured by network cards inserted into the proxy/router machine. These address are allocated in a standard fashion through prior purchase or obtaining from an address authorizing authority, currently the Internet Corporation for Assigned Names and Numbers (ICANN). When a machine is inserted for use into the AMPS, indications of these addresses are stored in field 631.

In one embodiment, a timestamp of the mapping between a public network address and a private address is also noted in table 630. After a defined time out, based upon this timestamp, the Address Management Data Server sends a request to the Address Proxy/Router associated with the mapping to unmap the public-to-private address mapping and updates the mapping table 630, thereby returning the associated public address to the pool of unused public network addresses.

Figure 7 is an example flow diagram of an example routine provided by a DNS'/API server of the Address Management Proxy System to return a public address that corresponds to a designated unique identifier. In essence, this routine implements a DNS query or DNS-like query capability for the AMPS using a modified GetHostByName interface or a specialized API, for example GetProxyIP, as described with reference to Figure 5. In summary, the routine dynamically allocates an appropriate Address Proxy/Router machine to associate with the wireless device and returns the public address of that machine (along with a TTL parameter and potentially other parameters). Specifically, in step 701, the routine determines the private (non-routable) address of the wireless device designated by a string parameter passed as input to the routine. For example, the string parameter may use fields such as "uniqueID.hostname.domain.tld," which specifies a typical hierarchy of person/service on a machine named "hostname" on a domain such as a company's network on a top level domain such as "org," "com," "edu," etc. One skilled in the art will recognize that many other string parameter designations could be used. One mechanism for implementing this routine is to request information from the Address Management Data Repository. In one embodiment, the data repository stores a table that maps unique IDs to private network addresses (see Table 610 in Figure 6). Preferably, any mechanism that is used by the AMPS stores this data in a secure manner in order to keep the wireless network addresses private. In step 702, the routine retrieves the public network address that corresponds to the private wireless network address of the designated device if one has already been assigned by the AMPS to that device and is still valid. In one embodiment, the data repository stores this mapping information between private wireless network address and public network address (see for example table 630 in Figure 6). If a public network address has not already been assigned or is not valid, then the routine causes a new public network address to be allocated and that new public address is associated with the private wireless network address. Appropriate tables in the data repository are then updated. In step 703, the routine determines the Address Proxy/Router machine that is associated with the assigned public network address (for example using table 620 in Figure 6). In step 704, the routine sends a request to the determined proxy/router machine to update its routing tables to map the determined public network address to the private wireless network address. In step 705, the routine updates information in the data repository to include any other connection related information (e.g., field 634 in Table 630 in Figure 6) and indicates a Time to Live (TTL) parameter for the public-private address association (e.g., field 633 in Table 630 in Figure 6). Once all of the tables have been updated in both the proxy/router and in the data repository, the DNS'/API server returns the determined public network address of the associated Address Proxy/Router machine. As described earlier, the public address may be a (hostname, port) pair when a port-based implementation is used.

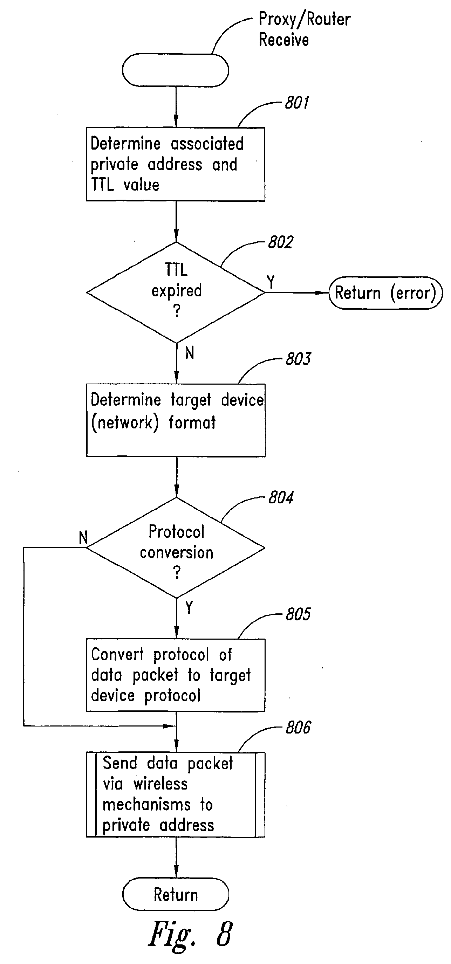

Figure 8 is an example flow diagram of an example routine within an Address Proxy/Router of an example Address Management Proxy System that receives data. This routine is implemented by an Address Proxy/Router to receive data from wired devices using the relevant protocol (*e*.*g*., TCP/IP, UDP/IP, etc.). (Data is sent to a particular Address Proxy/Router because the public (routable) address of that Address Proxy/Router was returned to the requesting/source device in response to a query of the DNS'/API server of the AMPS.) The proxy/router is responsible for any conversions of the data necessary to send data from the wired network to the wireless network (if, for example, the carrier infrastructure desires such conversion to be performed at this level). The proxy/router is also responsible for forwarding the data via the wireless network to the private wireless address of the wireless device that corresponds to the public address used to invoke the proxy/router.

Specifically, in step 801, the routine determines (for example, from the Address Management Data Repository) the private wireless address that corresponds to the invoked public address and the TTL parameter associated with this mapping. These values can be obtained, for example, from the public-to-private address table 630 of Figure 6. In step 802, the routine determines whether the value of the determined TTL parameter indicates that the mapping has expired, and if so, returns an error, else continues in step 803. In step 803, the routine determines the format required by the target device (the wireless network format). In step 804, the routine determines whether any protocol conversion is necessary and, if so, continues in step 805 else continues in step 806. Note that protocol conversion for a specific wireless network such as converting the data to an "HTTP" packet may be done by the proxy/router or may be done by some other component within the carrier infrastructure. One skilled in the art will recognize that these are example steps and that different formatting or different protocol conversion routines may be added or omitted as specific to the environment. In step 806, the Address Proxy/Router routine sends the data packet (which has been formatted and whose protocol is converted as necessary) to the determined associated private address of the wireless device, and returns.

One skilled in the art will recognize that the methods and systems for establishing bi-directional communication discussed herein are applicable to other types of public networks and protocols other than the Internet, TCP/IP, and UDP, or even a plurality of such networks. For example, private address to public address mappings can also be provided for ATM networks to connect devices on an ATM network with a wireless device. One skilled in the art will also recognize that the methods and systems discussed herein are applicable to differing protocols, communication media (optical, wireless, cable, etc.) and wireless devices (such as wireless handsets, electronic organizers, personal digital assistants, portable email machines, game machines, pagers, navigation devices such as GPS receivers, etc.) to different wired device (such as kiosks, personal computers, mainframes), and to wireless devices having a wired connection capabilities, e.g., wireless email or PDA devices that can be connected to a docking station for synchronization purposes.

## Claims

1. A method for use in a computer network (210) that is connected to a wireless communications network (230) through an address management proxy system, AMPS (220), the wireless communications network serving for connecting a wireless device (240) having an associated unique identifier (601) to the computer network via a bidirectional communications channel using a private network address (602) of the wireless communications network, the address management proxy system (220) having a public network address (631) of the computer network and the computer network serving for connecting a wired device (201, 202, 203) to the wireless network using a public network address (631) of the computer network comprising:
under control of the wired device (201, 202, 203),
using the public network address (631) of the address management proxy system (220), sending (501) a request to the address management proxy system for an indication of a public network address (631) of the computer network to use for communicating with the wireless device, the request indicating the unique identifier (601) associated with the wireless device (240);
under control of the address management proxy system (220),
receiving the request for the indication of the public network address (631);
dynamically determining (702) a public network address (631) from a plurality of available public network addresses of the computer network (210);
associating (704) the determined public network address (631) with the private network address (602) of the wireless device (240) that corresponds to the indicated unique identifier (601); and
forwarding (502) an indication of the determined public network address (631) to the wired device; and
under control of the wired device (201, 202, 203),
receiving (801) the indicated public network address (631); and
sending (806) data to the wireless device (240) using the indicated public network address (631), such that the wired device (201, 202, 203) perceives that the wired device is communicating directly with the wireless device (240);
**characterized in that**
the public network address contains a specification of an address, the address being an IP address and port pair;
wherein the indicated public network address is received as a result of a request by the wired device to a specialized address mapping function within the AMPS of the computer network, the specialized address mapping functions using a modified domain name service, DNS, that abides by at least one of the UDP and TCP/IP standards.

2. The method of claim 1, further comprising under control of the address management proxy system (220):
receiving the data sent from the wired device (201, 202, 203);
determining the private network address (602) that is associated with the indicated public network address (631); and
routing (505) the received data to the private network address over the wireless communication network in a manner that is transparent to the wired device.

3. The method of claim 1, wherein the computer network (210) is the Internet and each public network address is specified in accordance with Internet Protocol addressing conventions.

4. The method of claim 1, wherein the computer network is an ATM network.

5. The method of claim 1, wherein the indicated public network address (631) is the public network address of the address management proxy system (220), wherein data sent from the wired device (201, 202, 203) includes the unique identifier of the wireless device (240), and wherein the address management proxy system stores and forwards the data to the wireless device identified with the indicated unique identifier.

6. The method of claim 1, wherein the specialized address mapping function is a customized API.

7. The method of claim 1, wherein the specialized address mapping function supports an XML interface.

8. The method of claim 1, further comprising:
under control of the wireless device, sending data to the wired device using the public network address of the wired device (201, 202, 203), thereby performing bi-directional communication.

9. The method of claim 1, wherein a virtual end-to-end connection is established between the wired device (201, 202, 203) and the wireless device (240).

10. The method of claim 1, further comprising:
associating the determined public network address (631) with an expiration period; and
destroying the association between the determined public network address and the private address of the wireless device when the expiration period has expired.

11. The method of claim 1, wherein the expiration period is specified as Time to Live (TTL) data.

12. The method of claim 1, wherein the unique identifier is at least one of a person's name and telephone number, an MSISDN number, and an IMSI number.

13. A computer-readable memory medium containing instructions for controlling a processor in a computer system to establish a bi-directional communication channel between a wired device connected to a computer network environment using a public network address (631) and a wireless device connected to a wireless communications network and having a private network address for performing the method of one of claims 1-12.

14. A communications network comprising:
a wireless device (240) connected to a wireless communications network using a private network address (602) of the wireless communications network, the wireless device having an associated unique identifier (601);
a wired device (201, 202, 203) connected to a computer network using a public network address (631) of the computer network that is structured to:
request an indication of a public network address (631) of the computer network to use for communicating with the wireless device (240), the request indicating the unique identifier associated with the wireless device,
receive the indicated public network address (631), and,
send data to the wireless device (240) using the indicated public network address (631), such that the wired device communicates by means of a bidirectional communication channel directly with the wireless device using a virtual end-to-end connection; and
an address management proxy system (220) connected to the computer network using a public network address of the computer network, that is structured to:
receive the request from the wired device (201, 202, 203),
dynamically determine a public network address (631) from a plurality of available public network addresses of the computer network,
associate the determined public network address (631) with the private network address (602) of the wireless device (240) that corresponds to the indicated unique identifier (601), and
forward an indication of the determined public network address (631) to the wired device,
**characterized in that**
the public network address contains a specification of an address, the address being an IP address and port pair;
wherein the indicated public network address is received as a result of a request by the wired device to a specialized address mapping function within the AMPS of the computer network, the specified address mapping function using a modified domain name service, DNS, that abides by at least one of the UDP and TCP/IP standards.

15. A method in a computer network for communicating with a wireless device (240), the computer network and wireless device being inter-connected through an address management proxy system, AMPS (220), to establish a bidirectional communication channel using a private network address (602) of the wireless device, the wireless device (240) having an associated unique identifier (601) that is not the private network address, the address management proxy system (220) connected to the computer network using a public network address (631) of the computer network, comprising:
a wireless device requesting from the address management proxy system (220) a public network address (631) that corresponds to the unique identifier (601) associated with the wireless device (240);
receiving an indication of the public network address (631) of the wireless device; and
sending data to the indicated public network address (631);
**characterized in that**
the public network address contains a specification of an address, the address being an IP address and port pair,
wherein the indicated public network address is received as a result of the request by the wired device to a specialized address mapping function within the AMPS of the computer network, the specialized address mapping function using a modified domain name service, DNS, that abides by at least one of the UDP and TCP/IP standards.

16. A computer-readable memory medium, containing instructions for performing the method of claim 15.

17. A wired device (201, 202, 203) that is connected to a computer network using a public network address (631) of the computer network, the computer network being connected to an address management proxy system, AMPS (220), using a public network address (631) of the computer network, the address management proxy system (220) serving to connect a wireless device (240) to the computer network using a private network address (602), the wireless device (240) having an associated unique identifier (601) that is not the private network address, comprising:
a communications code module that is structured to:
request from the address management proxy system (220) a public network address (631) that corresponds to the unique identifier (601) associated with the computer network, the wireless device (240), using a private network address (602);
receive an indication of the public network address (631) of the wireless device (240); and
send data to the indicated public network address (631).
**characterized in that**
the public network address contains a specification of an address, the address being an IP address and a port pair;
wherein the indicated public network address is received as a result of a request by the wired device to a specialized address mapping function within the AMPS of the computer network, the specialized address mapping function using a modified domain name service, DNS, that abides by at least one of the UDP and TCP/IP standards.

18. The device of claim 1, wherein the communications code module implements at least one of UDP and TCP/IP communication with the wireless device.

## Patentansprüche

1. Verfahren zum Einsatz in einem Computer-Netzwerk (210), das mit einem Drahtlos-Kommunikationsnetzwerk (230) über ein Adressverwaltungs-Proxysystem (220) verbunden ist, wobei das Drahtlos-Kommunikationsnetzwerk dazu dient, eine Drahtlos-Vorrichtung (240), die eine mit ihr verknüpfte eindeutige Kennung (601) hat, mit dem Computer-Netzwerk über einen bidirektionalen Kommunikationskanal unter Verwendung einer privaten Netzwerkadresse (602) des Drahtlos-Kommunikationsnetzwerks zu verbinden, das Adressverwaltungs-Proxysystem (220) eine öffentliche Netzwerkadresse (631) des Computer-Netzwerks hat und das Computer-Netzwerk dazu dient, eine verdrahtete Vorrichtung (201, 202, 203) mit dem Drahtlos-Netzwerk unter Verwendung einer öffentlichen Netzwerkadresse (631) des Computer-Netzwerks zu verbinden, wobei es umfasst:
gesteuert von der verdrahteten Vorrichtung (201, 202, 203),
unter Verwendung der öffentlichen Netzwerkadresse (631) des Adressverwaltungs-Proxysystems (220), Senden (501) einer Anforderung einer Anzeige einer öffentlichen Netzwerkadresse (631) des Computer-Netzwerks zur Verwendung zur Kommunikation mit der Drahtlos-Vorrichtung an das Adressverwaltungs-Proxysystem, wobei die Anforderung die mit der Drahtlos-Vorrichtung (240) verknüpfte eindeutige Kennung (601) anzeigt;
gesteuert von dem Adressverwaltungs-Proxysystem (220),
Empfangen der Anforderung der Anzeige der öffentlichen Netzwerkadresse (631);
dynamisches Bestimmen (702) einer öffentlichen Netzwerkadresse (631) aus einer Vielzahl verfügbarer öffentlicher Netzwerkadressen des Computer-Netzwerks (210);
Verknüpfen (704) der bestimmten öffentlichen Netzwerkadresse (631) mit der privaten Netzwerkadresse (602) der Drahtlos-Vorrichtung (240), die der angezeigten eindeutigen Kennung (601) entspricht; und
Weiterleiten (502) einer Anzeige der bestimmten öffentlichen Netzwerkadresse (631) zu der verdrahteten Vorrichtung; und
gesteuert von der verdrahteten Vorrichtung (201, 202, 203),
Empfangen (801) der angezeigten öffentlichen Netzwerkadresse (631); und
Senden (806) von Daten zu der Drahtlos-Vorrichtung (240) unter Verwendung der anzeigten öffentlichen Netzwerkadresse (631), so dass die verdrahtete Vorrichtung (201, 202, 203) registriert, dass die verdrahtete Vorrichtung direkt mit der Drahtlos-Vorrichtung (240) kommuniziert;
**dadurch gekennzeichnet, dass**
die öffentliche Netzwerkadresse eine Angabe einer Adresse enthält, wobei die Adresse eine IP-Adresse und ein Port-Paar ist;
wobei die angezeigte öffentliche Netzwerkadresse als Ergebnis einer Anforderung durch die verdrahtete Vorrichtung an eine spezialisierte Adresszuordnungsfunktion in dem Adressverwaltungs-Proxysystem des Computer-Netzwerks empfangen wird und die spezialisierte Adresszuordnungsfunktion einen modifizierten Domain Name Service (DNS) verwendet, der wenigstens dem UDP- oder dem TCP/IP-Standard entspricht.

2. Verfahren nach Anspruch 1, das des Weiteren gesteuert von dem Adressverwaltungs-Proxysystem (220) umfasst:
Empfangen der von der verdrahteten Vorrichtung (201, 202, 203) gesendeten Daten;
Bestimmen der privaten Netzwerkadresse (602), die mit der angezeigten öffentlichen Netzwerkadresse (631) verknüpft ist; und
Leiten (505) der Daten zu der privaten Netzwerkadresse über das Drahtlos-Kommunikationsnetzwerk so, dass dies für die verdrahtete Vorrichtung transparent ist.

3. Verfahren nach Anspruch 1, wobei das Computer-Netzwerk (210) das Internet ist und jede öffentliche Netzwerkadresse entsprechend Adressier-Konventionen des Internet Protocol angegeben ist.

4. Verfahren nach Anspruch 1, wobei das Computer-Netzwerk ein ATM-Netzwerk ist.

5. Verfahren nach Anspruch 1, wobei die angezeigte öffentliche Netzwerkadresse (631) die öffentliche Netzwerkadresse des Adressverwaltungs-Proxysystems (220) ist, Daten, die von der verdrahteten Vorrichtung (201, 202, 203) gesendet werden, die eindeutige Kennung der Drahtlos-Vorrichtung (240) einschließen und das Adressverwaltungs-Proxysystem die Daten speichert und zu der Drahtlos-Vorrichtung weiterleiten, die mit der angezeigten eindeutigen Kennung identifiziert wird.

6. Verfahren nach Anspruch 1, wobei die spezialisierte Adresszuordnungsfunktion eine angepasste API ist.

7. Verfahren nach Anspruch 1, wobei die spezialisierte Adresszuordnungsfunktion eine XML-Schnittstelle unterstützt.

8. Verfahren nach Anspruch 1, das des Weiteren umfasst:
gesteuert von der Drahtlos-Vorrichtung Senden von Daten zu der verdrahteten Vorrichtung unter Verwendung der öffentlichen Netzwerkadresse der verdrahteten Vorrichtung (201, 202, 203), um so bidirektionale Kommunikation durchzuführen.

9. Verfahren nach Anspruch 1, wobei eine virtuelle Ende-zu-Ende-Verbindung zwischen der verdrahteten Vorrichtung (201, 202, 203) und der Drahtlos-Vorrichtung (240) hergestellt wird.

10. Verfahren nach Anspruch 1, das des Weiteren umfasst:
Verknüpfen der bestimmten öffentlichen Netzwerkadresse (631) mit einer Ablaufperiode; und
Zerstören der Verknüpfung zwischen der bestimmten öffentlichen Netzwerkadresse und der privaten Adresse der Drahtlos-Vorrichtung, wenn die Ablaufperiode abgelaufen ist.

11. Verfahren nach Anspruch 1, wobei die Ablaufperiode als TTL (Time-to-Live)-Daten angegeben ist.

12. Verfahren nach Anspruch 1, wobei die eindeutige Kennung wenigstens der Name und die Telefonnummer einer Person, eine MSISDN-Nummer oder eine IMSI-Nummer ist.

13. Computerlesbares Speichermedium, das Befehle zum Steuern eines Prozessors in einem Computersystem zum Einrichten eines bidirektionalen Kommunikationskanals zwischen einer verdrahteten Vorrichtung, die mit einer Computer-Netzwerkumgebung unter Verwendung einer öffentlichen Netzwerkadresse (631) verbunden ist, und einer Drahtlos-Vorrichtung enthält, die mit einem Drahtlos-Kommunikationsnetzwerk verbunden ist und eine private Netzwerkadresse hat, um das Verfahren nach einem der Ansprüche 1 - 12 durchzuführen.

14. Kommunikationsnetzwerk, das umfasst:
eine Drahtlos-Vorrichtung (240), die mit einem Drahtlos-Kommunikationsnetzwerk unter Verwendung einer privaten Netzwerkadresse (602) des Drahtlos-Kommunikationsnetzwerks verbunden ist, wobei die Drahtlos-Vorrichtung eine mit ihr verknüpfte eindeutige Kennung (601) hat;
eine verdrahtete Vorrichtung (201, 202, 203), die mit einem Computer-Netzwerk unter Verwendung einer öffentlichen Netzwerkadresse (631) des Computer-Netzwerks verbunden ist, das so strukturiert ist, dass es
eine Anzeige einer öffentlichen Netzwerkadresse (631) des Computer-Netzwerks zur Verwendung zur Kommunikation mit der Drahtlos-Vorrichtung (240) anfordert, wobei die Anforderung die mit der Drahtlos-Vorrichtung verknüpfte eindeutige Kennung anzeigt,
die angezeigte öffentliche Netzwerkadresse (631) empfängt, und
Daten unter Verwendung der öffentlichen Netzwerkadresse (631) zu der Drahtlos-Vorrichtung (240) sendet, so dass die verdrahtete Vorrichtung mittels eines bidirektionalen Kommunikationskanals unter Verwendung einer virtuellen Ende-zu-Ende-Verbindung direkt mit der Drahtlos-Vorrichtung kommuniziert; und
ein Adressverwaltungs-Proxysystem (220), das mit dem Computer-Netzwerk unter Verwendung einer öffentlichen Netzwerkadresse des Computer-Netzwerks verbunden und so strukturiert ist, dass es:
die Anforderung von der verdrahteten Vorrichtung (201, 202, 203) empfängt,
dynamisch eine öffentliche Netzwerkadresse (631) aus einer Vielzahl verfügbarer öffentlicher Netzwerkadressen des Computer-Netzwerks bestimmt,
die bestimmte öffentliche Netzwerkadresse (631) mit der privaten Netzwerkadresse (602) der Drahtlos-Vorrichtung (240) verknüpft, die der angezeigten eindeutigen Kennung (601) entspricht, und
eine Anzeige der bestimmten öffentlichen Netzwerkadresse (631) zu der verdrahteten Vorrichtung weiterleitet,
**dadurch gekennzeichnet, dass**
die öffentliche Netzwerkadresse eine Angabe einer Adresse enthält, wobei die Adresse eine IP-Adresse und ein Port-Paar ist,
wobei die angezeigte öffentliche Netzwerkadresse als Ergebnis einer Anforderung durch die verdrahtete Vorrichtung an eine spezialisierte Adresszuordnungsfunktion in dem Adressverwaltungs-Proxysystem des Computer-Netzwerks empfangen wird und die spezialisierte Adresszuordnungsfunktion einen modifizierten Domain Name Service (DNS) verwendet, der wenigstens dem UDP- oder dem TCP/IP-Standard entspricht.

15. Verfahren in einem Computer-Netzwerk zum Kommunizieren mit einer Drahtlos-Vorrichtung (240), wobei das Computer-Netzwerk und die Drahtlos-Vorrichtung über ein Adressverwaltungs-Proxysystem (220) verbunden sind, um einen bidirektionalen Kommunikationskanal unter Verwendung einer privaten Netzwerkadresse (602) der Drahtlos-Vorrichtung einzurichten, die Drahtlos-Vorrichtung (240) eine mit ihr verknüpfte eindeutige Kennung (601) hat, die nicht die private Netzwerkadresse ist, und das Adressverwaltungs-Proxysystem (220) mit dem Computer-Netzwerk unter Verwendung einer öffentlichen Netzwerkadresse (631) des Computer-Netzwerks verbunden ist, wobei es umfasst:
Anfordern einer öffentlichen Netzwerkadresse (631), die der mit der Drahtlos-Vorrichtung (240) verknüpften eindeutigen Kennung (601) entspricht, von dem Adressverwaltungs-Proxysystem (220) durch eine Drahtlos-Vorrichtung;
Empfangen einer Anzeige der öffentlichen Netzwerkadresse (631) der Drahtlos-Vorrichtung; und
Senden von Daten zu der angezeigten öffentlichen Netzwerkadresse (631),
**dadurch gekennzeichnet, dass**
die öffentliche Netzwerkadresse eine Angabe einer Adresse enthält, wobei die Adresse eine IP-Adresse und ein Port-Paar ist,
wobei die angezeigte öffentliche Netzwerkadresse als Ergebnis der Anforderung durch die verdrahtete Vorrichtung an eine spezialisierte Adresszuordnungsfunktion in dem Adressverwaltungs-Proxysystem des Computer-Netzwerks empfangen wird und die spezialisierte Adress-Mapping-Funktion einen modifizierten Domain Name Service (DNS) verwendet, der wenigstens dem UDP- oder dem TCP/IP-Standard entspricht.

16. Computerlesbares Speichermedium, das Befehle zum Durchführen des Verfahrens nach Anspruch 15 enthält.

17. Verdrahtete Vorrichtung (201, 202, 203), die mit einem Computer-Netzwerk unter Verwendung einer öffentlichen Netzwerkadresse (631) des Computer-Netzwerks verbunden ist, wobei das Computer-Netzwerk unter Verwendung einer öffentlichen Netzwerkadresse (631) des Computer-Netzwerks mit einem Adressverwaltungs-Proxysystem (220) verbunden ist, das Adressverwaltungs-Proxysystem (220) dazu dient, eine Drahtlos-Vorrichtung (240) unter Verwendung einer privaten Netzwerkadresse (602) mit dem Computer-Netzwerk zu verbinden und die Drahtlos-Vorrichtung (240) eine mit ihr verknüpfte eindeutige Kennung (601) hat, die nicht die private Netzwerkadresse ist, wobei sie umfasst:
ein Kommunikationscode-Modul, das so strukturiert ist, dass es
von dem Adressverwaltungs-Proxysystem (220) unter Verwendung einer privaten Netzwerkadresse (602) eine öffentliche Netzwerkadresse (631) anfordert, die der mit dem Computer-Netzwerk verknüpften eindeutigen Kennung (601) der Drahtlos-Vorrichtung (240) entspricht;
eine Anzeige der öffentlichen Netzwerkadresse (631) der Drahtlos-Vorrichtung (240) empfängt; und
Daten zu der angezeigten öffentlichen Netzwerkadresse (631) sendet,
**dadurch gekennzeichnet, dass**
die öffentliche Netzwerkadresse eine Angabe einer Adresse enthält, wobei die Adresse eine IP-Adresse und ein Port-Paar ist,
wobei die angezeigte öffentliche Netzwerkadresse als Ergebnis der Anforderung durch die verdrahtete Vorrichtung an eine spezialisierte Adresszuordnungsfunktion in dem Adressverwaltungs-Proxysystem des Computer-Netzwerks empfangen wird und die spezialisierte Adresszuordnungsfunktion einen modifizierten Domain Name Service (DNS) verwendet, der wenigstens dem UDP- oder dem TCP/IP-Standard entspricht.

18. Vorrichtung nach Anspruch 1, wobei das Kommunikationscode-Modul wenigstens eine UDP- oder eine TCP/IP-Kommunikation mit der Drahtlos-Vorrichtung implementiert.

## Revendications

1. Procédé pour une utilisation dans un réseau d'ordinateurs (210) qui est connecté à un réseau de communication sans fil (230) par l'intermédiaire d'un système proxy de gestion d'adresse, soit AMPS (220), le réseau de communication sans fil servant à connecter un dispositif sans fil (240) disposant d'un identificateur unique associé (601) sur le réseau d'ordinateurs via un canal de communication bidirectionnelle en utilisant une adresse de réseau privée (602) du réseau de communication sans fil, le système proxy de gestion d'adresse (220) disposant d'une adresse de réseau publique (631) du réseau d'ordinateurs et le réseau d'ordinateurs servant à connecter un dispositif câblé (201, 202, 203) sur le réseau sans fil en utilisant une adresse de réseau publique (631) du réseau d'ordinateurs, comprenant :
sous la commande du dispositif câblé (201, 202, 203),
en utilisant l'adresse de réseau publique (631) du système proxy de gestion d'adresse (220), l'envoi (501) d'une requête au système proxy de gestion d'adresse quant à une indication d'une adresse de réseau publique (631) du réseau d'ordinateurs pour une utilisation pour communiquer avec le dispositif sans fil, la requête indiquant l'identificateur unique (601) associé au dispositif sans fil (240) ;
sous la commande du système proxy de gestion d'adresse (220),
la réception de la requête quant à l'indication de l'adresse de réseau publique (631) ;
la détermination de manière dynamique (702) d'une adresse de réseau publique (631) à partir d'une pluralité d'adresses de réseau publiques disponibles du réseau d'ordinateurs (210) ;
l'association (704) de l'adresse de réseau publique déterminée (631) avec l'adresse de réseau privée (602) du dispositif sans fil (240) qui correspond à l'identificateur unique indiqué (601) ; et
le renvoi (502) d'une indication de l'adresse de réseau publique déterminée (631) au dispositif câblé ; et
sous la commande du dispositif câblé (201, 202, 203),
la réception (801) de l'adresse de réseau publique indiquée (631) ; et
l'envoi (806) de données au dispositif sans fil (240) en utilisant l'adresse de réseau publique indiquée (631) de telle sorte que le dispositif câblé (201, 202, 203) perçoive que le dispositif câblé est en train de communiquer directement avec le dispositif sans fil (240),
**caractérisé en ce que** :
l'adresse de réseau publique contient une spécification d'une adresse, l'adresse étant une paire constituée par une adresse IP et par un port,
dans lequel l'adresse de réseau publique indiquée est reçue en tant que résultat d'une requête au moyen du dispositif câblé sur une fonction de cartographie d'adresse spécialisée à l'intérieur de l'AMPS du réseau d'ordinateurs, les fonctions de cartographie d'adresse spécialisées utilisant un service de noms de domaine, soit DNS, modifié qui est conforme à au moins l'un des standards UDP et TCP/IP.

2. Procédé selon la revendication 1, comprenant en outre, sous la commande du système proxy de gestion d'adresse (220) :
la réception des données qui sont envoyées depuis le dispositif câblé (201, 202, 203) ;
la détermination de l'adresse de réseau privée (602) qui est associée à l'adresse de réseau publique indiquée (631) ; et
le routage (505) des données reçues jusqu'à l'adresse de réseau privée sur le réseau de communication sans fil de telle sorte qu'elles soient transparentes vis-à-vis du dispositif câblé.

3. Procédé selon la revendication 1, dans lequel le réseau d'ordinateurs (210) est l'Internet et chaque adresse de réseau publique est spécifiée conformément à des conventions d'adressage de Protocole de l'Internet.

4. Procédé selon la revendication 1, dans lequel le réseau d'ordinateurs est un réseau ATM.

5. Procédé selon la revendication 1, dans lequel l'adresse de réseau publique indiquée (631) est l'adresse de réseau publique du système proxy de gestion d'adresse (220), dans lequel des données qui sont envoyées depuis le dispositif câblé (201, 202, 203) incluent l'identificateur unique du dispositif sans fil (240) et dans lequel le système proxy de gestion d'adresse stocke et renvoie les données sur le dispositif sans fil qui est identifié à l'aide de l'identificateur unique indiqué.

6. Procédé selon la revendication 1, dans lequel la fonction de cartographie d'adresse spécialisée est une API personnalisée.

7. Procédé selon la revendication 1, dans lequel la fonction de cartographie d'adresse spécialisée supporte une interface XML.

8. Procédé selon la revendication 1, comprenant en outre :
sous la commande du dispositif sans fil, l'envoi de données sur le dispositif câblé en utilisant l'adresse de réseau publique du dispositif câblé (201, 202, 203), d'où ainsi la réalisation d'une communication bidirectionnelle.

9. Procédé selon la revendication 1, dans lequel une connexion bout à bout virtuelle est établie entre le dispositif câblé (201, 202, 203) et le dispositif sans fil (240).

10. Procédé selon la revendication 1, comprenant en outre :
l'association de l'adresse de réseau publique déterminée (631) avec une période d'expiration ; et
la destruction de l'association entre l'adresse de réseau publique déterminée et l'adresse privée du dispositif sans fil lorsque la période d'expiration est expirée.

11. Procédé selon la revendication 1, dans lequel la période d'expiration est spécifiée en tant que données de Temps à Vivre (TTL).

12. Procédé selon la revendication 1, dans lequel l'identificateur unique est au moins un élément pris parmi un nom de personne et un numéro de téléphone de personne, un numéro MSISDN et un numéro IMSI.

13. Support de mémoire lisible par ordinateur contenant des instructions pour commander un processeur dans un système d'ordinateurs afin d'établir un canal de communication bidirectionnelle entre un dispositif câblé qui est connecté à un environnement de réseau d'ordinateurs en utilisant une adresse de réseau publique (631) et un dispositif sans fil qui est connecté à un réseau de communication sans fil et qui comporte une adresse de réseau privée pour réaliser le procédé selon l'une des revendications 1 à 12.

14. Réseau de communication comprenant :
un dispositif sans fil (240) qui est connecté à un réseau de communication sans fil en utilisant une adresse de réseau privée (602) du réseau de communication sans fil, le dispositif sans fil comportant un identificateur unique associé (601) ;
un dispositif câblé (201, 202, 203) qui est connecté à un réseau d'ordinateurs en utilisant une adresse de réseau publique (631) du réseau d'ordinateurs, qui est structuré pour :
demander en requête une indication d'une adresse de réseau publique (631) du réseau d'ordinateurs pour une utilisation pour communiquer avec le dispositif sans fil (240), la requête indiquant l'identificateur unique associé au dispositif sans fil ;
recevoir l'adresse de réseau publique indiquée (631) ; et
envoyer des données sur le dispositif sans fil (240) en utilisant l'adresse de réseau publique indiquée (631) de telle sorte que le dispositif câblé communique au moyen d'un canal de communication bidirectionnelle directement avec le dispositif sans fil en utilisant une connexion bout à bout virtuelle ; et
un système proxy de gestion d'adresse (220) qui est connecté au réseau d'ordinateurs en utilisant une adresse de réseau publique du réseau d'ordinateurs, qui est structuré pour :
recevoir la requête en provenance du dispositif câblé (201, 202, 203) ;
déterminer de façon dynamique une adresse de réseau publique (631) à partir d'une pluralité d'adresses de réseau publiques disponibles du réseau d'ordinateurs ;
associer l'adresse de réseau publique déterminée (631) avec l'adresse de réseau privée (602) du dispositif sans fil (240) qui correspond à l'identificateur unique indiqué (601) ; et
renvoyer une indication de l'adresse de réseau publique déterminée (631) au dispositif câblé,
**caractérisé en ce que** :
l'adresse de réseau publique contient une spécification d'une adresse, l'adresse étant une paire constituée par une adresse IP et par un port,
dans lequel l'adresse de réseau publique indiquée est reçue en tant que résultat d'une requête au moyen du dispositif câblé sur une fonction de cartographie d'adresse spécialisée à l'intérieur de l'AMPS du réseau d'ordinateurs, la fonction de cartographie d'adresse spécialisée utilisant un service de noms de domaine, soit DNS, modifié qui est conforme à au moins l'un des standards UDP et TCP/IP.

15. Procédé dans un réseau d'ordinateurs pour communiquer avec un dispositif sans fil (240), le réseau d'ordinateurs et le dispositif sans fil étant interconnectés par l'intermédiaire d'un système proxy de gestion d'adresse, soit AMPS (220), pour établir un canal de communication bidirectionnelle en utilisant une adresse de réseau privée (602) du dispositif sans fil, le dispositif sans fil (240) disposant d'un identificateur unique associé (601) qui n'est pas l'adresse de réseau privée, le système proxy de gestion d'adresse (220) étant connecté au réseau d'ordinateurs en utilisant une adresse de réseau publique (631) du réseau d'ordinateurs, comprenant :
le fait qu'un dispositif sans fil demande en requête auprès du système proxy de gestion d'adresse (220) une adresse de réseau publique (631) qui correspond à l'identificateur unique (601) associé au dispositif sans fil (240) ;
la réception d'une indication de l'adresse de réseau publique (631) du dispositif sans fil ; et
l'envoi de données sur l'adresse de réseau publique indiquée (631),
**caractérisé en ce que** :
l'adresse de réseau publique contient une spécification d'une adresse, l'adresse étant une paire constituée par une adresse IP et par un port,
dans lequel l'adresse de réseau publique indiquée est reçue en tant que résultat de la requête au moyen du dispositif câblé sur une fonction de cartographie d'adresse spécialisée à l'intérieur de l'AMPS du réseau d'ordinateurs, la fonction de cartographie d'adresse spécialisée utilisant un service de noms de domaine, soit DNS, modifié qui est conforme à au moins l'un des standards UDP et TCP/IP.

16. Support de mémoire lisible par ordinateur contenant des instructions pour réaliser le procédé de la revendication 15.

17. Dispositif câblé (201, 202, 203) qui est connecté à un réseau d'ordinateurs en utilisant une adresse de réseau publique (631) du réseau d'ordinateurs, le réseau d'ordinateurs étant connecté à un système proxy de gestion d'adresse, soit AMPS (220), en utilisant une adresse de réseau publique (631) du réseau d'ordinateurs, le système proxy de gestion d'adresse (220) servant à connecter un dispositif sans fil (240) sur le réseau d'ordinateurs en utilisant une adresse de réseau privée (602), le dispositif sans fil (240) comportant un identificateur unique associé (601) qui n'est pas l'adresse de réseau privée, comprenant :
un module de code de communication qui est structuré pour :
demander en requête au système proxy de gestion d'adresse (220) une adresse de réseau publique (631) qui correspond à l'identificateur unique (601) associé à l'aide du réseau d'ordinateurs au dispositif sans fil (240) en utilisant une adresse de réseau privée (602) ;
recevoir une indication de l'adresse de réseau publique (631) du dispositif sans fil (240) ; et
envoyer des données sur l'adresse de réseau publique indiquée (631),
**caractérisé en ce que** :
l'adresse de réseau publique contient une spécification d'une adresse, l'adresse étant une paire constituée par une adresse IP et par un port,
dans lequel l'adresse de réseau publique indiquée est reçue en tant que résultat d'une requête au moyen du dispositif câblé sur une fonction de cartographie d'adresse spécialisée à l'intérieur de l'AMPS du réseau d'ordinateurs, la fonction de cartographie d'adresse spécialisée utilisant un service de noms de domaine, soit DNS, modifié qui est conforme à au moins l'un des standards UDP et TCP/IP.

18. Dispositif selon la revendication 1, dans lequel le module de code de communication met en oeuvre au moins une communication prise parmi une communication UDP et une communication TCP/IP avec le dispositif sans fil.
